# EUROPÄISCHE PATENTSCHRIFT

(11) **EP 1 470 182 B1**
(45) Veröffentlichungstag und Bekanntmachung des Hinweises auf die Patenterteilung: **06.04.2005**
(21) Anmeldenummer: 02776796.1
(22) Anmeldetag: 10.10.2002
(51) Int. Cl.: C08K 5/00, C08L 29/14, C08J 5/18, C03C 27/00

(54) **PVB-FOLIE FÜR VERBUNDSICHERHEITSGLAS UND VERBUNDSICHERHEITSGLAS**
PVB FILM FOR COMPOSITE SAFETY GLASS AND COMPOSITE SAFETY GLASS
FEUILLE DE PVB POUR VERRE DE SECURITE ET VERRE DE SECURITE FEUILLETE

(30) Priorität: 11.10.2001 DE 10150091
(43) Veröffentlichungstag der Anmeldung: 27.10.2004
(73) Patentinhaber: HT TROPLAST AG, 53840 Troisdorf (DE)
(72) Erfinder: KELLER, Uwe, 53177 Bonn (DE); STENZEL, Holger, 53773 Hennef (DE); HOSS, Manfred, 53844 Troisdorf (DE)
(74) Vertreter: HT-Patentabteilung
(86) Internationale Anmeldenummer: PCT/DE2002/003817
(87) Internationale Veröffentlichungsnummer: WO 2003/033583

(56) Entgegenhaltungen:
- EP-A- 0 102 502
- EP-A- 0 185 863
- US-A- 4 379 116
- US-A- 4 533 601
- US-A- 4 537 830

## Beschreibung

### Technisches Gebiet

Die Erfindung betrifft eine weichmacherhaltige Folie aus teilacetalisierten Polyvinylalkoholen als Zwischenschicht in Verbundsicherheitsgläsern.

Verbundsicherheitsscheiben, bestehend aus zwei Glasscheiben und einer die Glasscheiben verbindenden Klebefolie aus teilacetalisierten Polyvinylalkoholen, vorzugsweise aus Polyvinylbutyral (PVB), werden insbesondere als Windschutzscheiben in Kraftfahrzeugen eingesetzt, wobei gegebenenfalls eine Glasscheibe durch eine Kunststoffscheibe, vornehmlich aus einem amorphen Polyamid, transparentem PMMA, Polycarbonat oder Polyester, ersetzt sein kann. Auch auf dem Bausektor, z. B. als Fensterscheiben oder als Zwischenwände, werden solche Silikatglas/Silikatglas- bzw. Silikatglas/Kunststoff-Verbunde eingesetzt, wobei gegebenenfalls je nach ihrer Verwendung, z. B. als Verbundpanzergläser, auch Mehrfachverbunde, also Verbunde, die aus mehr als zwei tragenden Schichten bestehen, eingesetzt werden.

Die Sicherheitseigenschaften von Verbundglas mit einer Polyvinylbutyral-Folie (PVB-Folie) hängen bekanntermaßen von der Haftkraft zwischen Folie und Glas ab. Ist die Haftkraft sehr hoch, ist beim mechanischen Versagen des Verbundglases - z.B. durch Einwirkung eines Stoßes - ein Klebenbleiben der Glasbruchstücke an der Folie zwar gewährleistet, so daß sich scharfkantige Glassplitter nicht ablösen können, jedoch kann ein aufprallendes Objekt das Verbundglas relativ leicht durchdringen, da die PVB-Folie so stark am Glas haftet, daß sie sich an der Auftreffstelle kaum elastisch verformen kann und somit auch nur wenig zum Abbremsen des Objektes beiträgt. Liegt die Haftung zum Glas auf einem niedrigeren Niveau, kann sich die PVB-Folie an der Auftreffstelle unter Dehnbeanspruchung vom Glas ablösen und verformen, wodurch das auftreffende Objekt abgebremst wird.

Als Weichmacher für PVB finden in herkömmlichen PVB-Folien kommerziell überwiegend aliphatische Diester des Tri- bzw. Tetraethylenglykols Verwendung. Hierzu zählen 3GH, 3G7 sowie 4G7, bei denen die vorangestellte Ziffer auf die Anzahl n der Wiederholungseinheit H-(O-CH₂-CH₂)ₙ-OH des Oligoethylenglykol-Anteils und H auf 2-Ethylbutyrat, 7 auf n-Heptanoat und 8 auf 2-Ethylhexanoat verweist. Weitere bekannte Weichmacher für Polyvinylbutyral sind u. A. Dialkyladipate mit aliphatischen bzw. cycloaliphatischen Esteranteilen, Dialkylsebazate, Triorganophosphate, Triorganophosphite oder Phthalatweichmacher wie Benzylbutylphthalat.

Da eine zu geringe Haftung andererseits das Ablösen von Glasbruchstücken von der PVB-Folie erleichtert und somit das Verletzungsrisiko für Personen erhöht, strebt man in der Praxis für bestimmte Anwendungen einen Kompromiß zwischen hoher und niedriger Haftkraft, also ein mittleres Haftungsniveau an, um beide Anforderungen - Splitterbindung und Penetrationshemmung - auf möglichst hohem Niveau zu erfüllen. Dieses ist insbesondere bei Verbundsicherheitsscheiben für Kraftfahrzeuge der Fall, während Verbundsicherheitsscheiben für den Baubereich häufig eine relativ hohe Haftung zwischen Glas und Klebefolie aufweisen sollen.

### Stand der Technik

Zur kontrollierten Absenkung der Haftung von PVB-Folie auf Glas werden seit langem Alkali- und Erdalkali-Metallsalze organischer Säuren, beispielsweise in Form von Hydroxiden, Salzen oder Komplexen, eingesetzt, die bei der Produktion von PVB-Folien der Formulierung in kleinen Mengen zugesetzt werden (DE 15 96 902 B, DE 15 96 894 B, US 3,249,488 A, US 3,249,489 A, US 3,262,835 A, US 3,262,836 A). Allerdings zeigen Alkalimetallsalze, wie z. B. Kaliumacetat oder -formiat deutliche Nachteile im Bezug auf die Bewitterungsstabilität freiliegender Kanten des Verbundsicherheitsglases. Wegen der ausgeprägten Hygroskopizität vieler Salze wird ein Anreichern von eindringendem Wasser an der Grenzfläche PVB-Folie/Glas begünstigt, was die Haftung im Randbereich des Verbundsicherheitsglases soweit herabsetzt, daß eine Ablösung der Folie vom Glas resultieren kann. Darüber hinaus verursachen Alkalimetallsalze eine optisch störende weiße Eintrübung der PVB-Folie an den Stellen, an denen sie Wasser ausgesetzt ist.

Salze von Erdalkalimetallen zeigen diese Nachteile nicht, so daß es wünschenswert erscheint, diese als Antihaftmittel zu verwenden. Allerdings haben diese in Kombination mit bestimmten Weichmachern den Nachteil, daß die Haftung zum Glas von der thermischen Belastung des Verbundsicherheitsglases abhängen kann. Damit können sich Schwankungen der Haftung in Abhängigkeit von der Druck- und Temperaturführung des Autoklaven-Prozesses, der sowohl in Bezug auf die Temperatur als auch in Bezug auf die Dauer von Weiterverarbeiter zu Weiterverarbeiter und von Produktion zu Produktion variieren kann, ergeben. Insbesondere bei der Verbundglasherstellung im üblichen Autoklavenprozeß kann das Haftungsnineau bei länger einwirkender hoher Verarbeitungstemperatur plötzlich stark abfallen, unter extremen Verarbeitungsbedingungen mitunter bis auf null. Diese Phänomene werden besonders bei Verwendung bestimmter Weichmacher, nämlich Glykolestern aus Oligoethylenglykolen und linearen Carbonsäuren, in Verbindung mit Erdalkalimetallsalzen als Antihaftmittel beobachtet.

Aus der DE 24 10 153 C3 ist ein Verfahren zur Einstellung der Haftkraft von weichmacherhaltigen teilacetalisierten Polyvinylalkoholen mit siliciumfunktionellen und silicium-organofunktionellen Silanen bekannt, wobei die siliciumfunktionellen Silane die Haftung mindern und die silicium-organofunktionellen Silane die Haftung erhöhen.

Der Zusatz von Silanverbindungen führt jedoch je nach den Prozeßbedingungen zu gelegentlicher, schwer zu kontrollierender örtlicher Vernetzung des eingesetzten Harzes und dadurch zu sichtbarer Knötchenbildung.

Die US 3,841,955 A1 beschreibt die Verwendung von Organo-Phosphaten wie z.B. Tri-2-ethylhexylphosphat als Weichmacher in Mischung mit einem weiteren Nicht-Phosphat-Weichmacher. Die verwendeten Mengen sind mit mehr als 20 % der Weichmachermischung angegeben. Ein Einfluß auf die Haftung der PVB-Folie wird nicht erwähnt.

Die US 4,681,810 A1 schlägt die Verwendung von Organo-Phosphaten in PVB-Folie zur Verleihung von selbstverlöschenden Eigenschaften im Brandfall vor. Organisches Phosphat wird wegen seiner speziellen verkohlenden und Phosphite wegen ihrer "sequestering"-Eigenschaften verwendet. Die Menge an Organo-Phosphaten ist so gewählt, daß es ein Hauptbestandteil der Folie wird. Ein Einfluß auf die Haftung der PVB-Folie wird nicht erwähnt.

Die US 3,950,305 A1 beschreibt die Verwendung von Estern der Phosphorigen Säure (Phosphite) in Mischung mit phenolischen Antioxidantien mit dem Ziel, die thermische Stabilität des PVB zu erhöhen. Dies wird anhand der Vergilbung unter Sauerstoffzutritt und erhöhter Temperatur und dem Drehmomentverlauf bei Knetversuchen bewertet. Ein etwaiger Einfluß auf die Haftung der PVB-Folie wird nicht angesprochen. Der minimale Anteil an Phosphit in der Formulierung für eine Folie für Verbundsicherheitsglas ist mit 0,6 Gew.-%, bezogen auf das eingesetzte PVB, angegeben.

Es ist ein allgemein bekanntes Phänomen, daß sich bei ein und derselben Glasscheibe mit ein und derselben PVB-Folie ein unterschiedliches Haftungsniveau zu Zinn- und Feuerseite erhalten läßt, wobei es jedoch als optimal angesehen wird, wenn dieser Unterschied so gering als möglich ausfällt. Dieser Unterschied ist auf die unterschiedliche chemische Zusammensetzung der beiden Oberflächen von Floatglas zurückzuführen, wobei die sogenannte Zinnseite - die Seite, die im Floatglas-Verfahren in Kontakt mit dem flüssigen Zinn steht - beim fertigem Produkt mit Zinn dotiert ist. Eine in Bezug auf Haftungskonstanz optimierte PVB-Folie sollte hingegen trotz des Unterschiedes zwischen den beiden Glasseiten sowie der häufig anzutreffenden chargen- und herstellerabhängigen Qualitätsschwankungen ein von der Orientierung des Glases unabhängiges Haftungsniveau aufweisen, das heißt, das Haftungsniveau sollte auf der Feuerseite möglichst gleich dem Haftungsniveau auf der Zinnseite liegen.

### Aufgabe

Aufgabe der vorliegenden Erfindung ist es, eine Folie auf der Basis von weichmacherhaltigem teilacetalisiertem Polyvinylalkohol zur Verwendung als Zwischenschicht in Verbundsicherheitsgläsern zur Verfügung zu stellen, die einerseits bei einem Verbund mit Floatgläsern auf der Zinn- und der Feuerseite jeweils ein möglichst gleichmäßiges Haftungsniveau aufweist und die andererseits bei unterschiedlichen Weiterverarbeitungsbedingungen zu einem gleichmäßigen Haftungsniveau führt. Ein weiteres Anliegen der Erfindung ist es, ein Laminat, umfassend wenigstens eine Silikatglasscheibe sowie eine Folie auf der Basis von weichmacherhaltigem teilacetalisiertem Polyvinylalkohol zur Verfügung zu stellen, das diese Bedingungen erfüllt.

Ein weiteres Anliegen der Erfindung ist es, Haftungsabfälle in dem fertigem Verbundsicherheitsglas von mehr als 2,5 Pummeleinheiten, wie nachfolgend definiert, auch bei extremen Temperaturbeanspruchungen auszuschließen.

### Darstellung der Erfindung

Es wurde nun überraschend entdeckt, daß Erdalkali-Metallsalze organischer Säuren in Kombination mit bestimmtem Phosphorverbindungen eine stabile, im Hinblick auf thermische Schädigung weniger anfällige Haftungseinstellung ermöglichen. Durch Zugabe der Phosphorverbindungen wird allerdings die Haftung zum Glas zunächst erhöht, nach Gegensteuern durch Erhöhung der Menge an Erdalkali-Metallsalzen organischer Säuren resultiert jedoch eine insgesamt stabilere Haftungseinstellung auf dem ursprünglich angestrebten Niveau mit einem Pummelwert von ≥ 1,5 und ≤ 8.

Zu den erfindungsgemäßen Phosphorverbindungen zählen Organophosphite, daß heißt Triester der Phosphorigen Säure mit organischen Resten, als auch Organophosphate, daß heißt Triester der Orthophosphorsäure mit organischen Resten.

Insbesondere können dies sein symmetrische oder asymmetrische Alkylphosphite oder -phosphate, wobei symmetrisch zum Ausdruck bringt, daß die jeweils drei organischen Substituenten, über ein Sauerstoffatom mit dem Phosphor verknüpft, gleich sind, während sich bei asymmetrischen Typen mindestens zwei der drei Substituenten voneinander unterscheiden.

Weiterhin kann es sich handeln um symmetrische oder asymmetrische Alkylarylphosphite oder -phosphate, symmetrische oder asymmetrische Arylphosphite oder -phosphate bzw. gemischte Phosphite bzw. Phosphate die sowohl Arylsubstituenten als auch Alkylsubstituenten aufweisen. In allen Fällen können auch mehr als eine Phosphit bzw. Phosphat-Einheit durch einen oder mehrere organische Reste chemisch verknüpft sein.

Beispiele für symmetrische Alkylphosphite sind Trilaurylphosphit oder Tristearylphosphit.

Als Beispiel für symmetrische Alkylarylphosphite können dienen Tris(2,4-di-t-butylphenyl)phosphit (erhältlich z. B. als ALKANOX® 240 der Firma Great Lakes Chemical Corporation) oder Tris(nonylphenyl)phosphit (erhältlich z. B. als IRGAFOS® TNPP der Firma Ciba).

Als Beispiel für ein symmetrisches Arylphosphit kann dienen Triphenylphosphit (erhältlich z. B. als IRGAFOS® TPP der Firma Ciba)

Als Beispiel für ein gemischtes Phosphit, welches sowohl Arylals auch Alkylsubstituenten aufweist, kann dienen Diphenyl-octylphosphit.

Ein Phosphit, in welchem mehr als eine Phosphit-Einheit durch einen organischen Rest chemisch verknüpft sind, ist mit IRGAGOS® P-EPQ der Firma Ciba gegeben.

Erfindungsgemäß enthält die Folie neben dem teilacetalisierten Polyvinylalkohol und einem Weichmacher einen haftungsreduzierenden Zusatz in Form von Erdalkali-Metallsalzen organischer Säuren. Hierfür wird ein Magnesiumsalz und/oder ein Kalziumsalz organischer Säuren verwendet. Die Menge des einzusetzenden haftungsreduzierenden Erdalkali-Metallsalzes organischer Säuren richtet sich nach dem eingesetzten PVB-Harz, dem Weichmacher und dem gewünschten Pummelwert und ist weiterhin abhängig von dem eingesetzten Organophosphit bzw. Organophosphat. Die in der Praxis benötigte Menge muß daher durch einfache Versuche ermittelt werden. Sie liegt allgemein zwischen 0,001 und 0,25 Gew.-%, bezogen auf den Gesamtansatz der Folie. Bei Einsatz von 3G8 (Triethylenglykol-di-2-ethylhexanoat) als Weichmacher liegt die bevorzugte Menge an Erdalkali-Metallsalzen organischer Säuren zwischen 0,01 bis 0,1 Gew.-%, bei 3G7 (Triethylenglykol-n-Heptanoat) als Weichmacher zwischen 0,005 und 0,05 Gew.-% und bei DHA (Di-n-hexyladipat) zwischen 0,005 und 0,05 Gew.-%, jeweils bezogen auf den Gesamtansatz der Folie.

Das plastifizierte teilacetalisierte Polyvinylalkohol-Harz enthält vorzugsweise 25 bis 45 Gewichtsteile und besonders bevorzugt 30 bis 40 Gewichtsteile Weichmacher, bezogen auf 100 Gewichtsteile Harz.

Die teilacetalisierten Polyvinylakohole werden in bekannter Weise durch Acetalisierung von hydrolysierten Polyvinylestern hergestellt. Als Aldehyde können beispielsweise Formaldehyd, Acetaldehyd, Propionaldehyd, Butyraldehyd u. dgl., bevorzugt Butyraldehyd, verwendet werden. Das bevorzugte Polyvinylbutyral-Harz enthält 10 bis 25 Gew.-%, vorzugsweise 17 bis 23 Gew.-% und besonders bevorzugt 19 bis 21 Gew.-% Vinylalkoholreste. Das Polyvinylbutyral enthält ggf. zusätzlich 0 bis 20 Gew.-%, bevorzugt 0,5 bis 2,5 Gew.-% Acetatreste.

Der Wassergehalt der Folien wird bevorzugt auf 0,15 bis 0,8 Gew.-%, insbesondere auf 0,3 bis 0,5 Gew.-% eingestellt.

Zur Prüfung der Haftung von Folien auf der Basis von weichmacherhaltigem teilacetalisiertem Polyvinylalkohol und zur Überprüfung der Wirkung von Antihaftmitteln wird ein sogenannter Pummeltest angewendet, der in der Literatur in gewissen Varianten beschrieben wird. Um eine für Vergleichszwecke und für quantitative Messungen ausreichende Beurteilung zu ermöglichen, wird nachfolgend ein genau definierter, reproduzierbarer Pummeltest beschrieben. Soweit in dieser Beschreibung oder in den Ansprüchen auf einen Pummeltest bezug genommen wird, ist damit ein Test gemäß nachfolgender Definition gemeint:

### Pummeltest

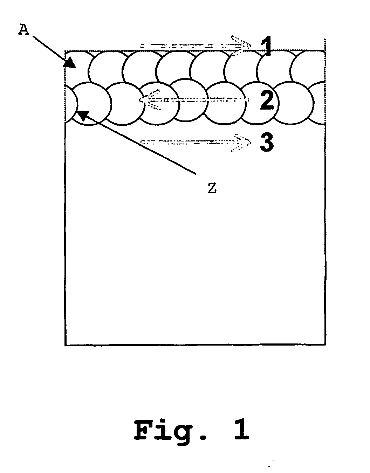

Zur Prüfung der Haftung zwischen einer PVB-Folie und Glas wird die Folie mit zwei Scheiben eines 2,1 mm dickem Floatglases (PLANILUX® ) laminiert. Aus dem so hergestellten Verbundsicherheitsglas wird ein Prüfkörper in den Abmessungen 8 x 30 cm geschnitten. Diese Probe wird mindestens 24 h in einer Kältekammer bei - 18 °C ( ± 2°C) gelagert. Der gekühlte Prüfling wird aus der Kältekammer entnommen und sofort "gepummelt", wobei die Probe gleichmäßig unter einem positionstreu aufschlagendem Hammerkopf (500 g schwer, Rundkopf, Energie der einzelnen Hammerschläge 1 Nm) entlang geführt wird, so daß Hammeraufschlag neben Hammeraufschlag mit ca. 75 %-iger Überlappung erfolgt (Fig. 1). Wie in Fig. 1 gezeigt, hat der erste Aufschlag eine Ecke des Prüfkörpers zu treffen, wonach eine komplette Zeile quer zum Prüfkörper bearbeitet wird - in Fig. 1 symbolisiert durch Pfeil 1 - und erst danach die benachbarte Zeile - in Fig. 1 symbolisiert durch Pfeil 2), die dann weiter von der Kante entfernt verläuft, in Gegenrichtung zu "pummeln" ist, bis insgesamt auf mindestens 6 cm, gemessen von der Kante, sämtliches Glas zertrümmert und gegebenenfalls von der Folie abgelöst ist. Während dieser Prozedur muß der Prüfkörper immer flach in einem Winkel von 5° gegenüber einer unter einem Winkel von 45° montierten Stahlauflage aufliegen. In Fig. 1 ist der erste Hammerschlag der ersten Zeile mit A, der letzte Schlag der zweiten Zeile mit Z bezeichnet.

Nach Beendigung dieser Prozedur wird die Probe leicht abgeklopft, um eventuell vorhandene lose Glassplitter zu entfernen. Für die quantitative Ermittlung des Pummelwertes wird visuell ermittelt, welche Anteil der Folienfläche frei liegt und welcher Anteil noch von Glaskrümeln bedeckt ist. Die Beurteilung erfolgt bei Raumtemperatur. Bei der Beurteilung von Zwischenstufen wird die Probe im Auflicht betrachtet und visuell die freiliegende Folienfläche bestimmt. Ergänzend kann die detaillierte Beschreibung der Vorgehensweise für den Pummeltest in der Dissertation "A comparative analysis of PVB / glass laminate adhesion tests"; von Kristin Leah Kidd; University of Massachusetts-Lowell; 1993 herangezogen werden. Die Bewertung des bearbeiteten Prüfkörpers und die Zuordnung einer Zahl als Pummelwert ist anhand nachfolgender Tabelle 1 vorzunehmen. Die Pummelwerte nehmen dabei in Abhängigkeit von der freigelegten Folienfläche Werte zwischen 0 und 10 an.

Zwischenstufen von 0,5 Pummeleinheiten können bei der Bewertung vergeben werden. Eine kleinere Unterscheidung ist allerdings aufgrund der beschränkten Meßgenauigkeit nicht mehr sinnvoll.

### Tabelle 1:

**Tabelle 1:**

| **Definition der Pummel-Skala** | |
|---|---|
| **Freigelegte Folienfläche in %** | **Pummelwert** |
| großflächige Glasablösungen | -1 |
| 100 | 0 |
| 99 | 1 |
| 97 | 2 |
| 92 | 3 |
| 83 | 4 |
| 67 | 5 |
| 43 | 6 |
| 20 | 7 |
| 8 | 8 |
| 1 | 9 |
| 0 | 10 |

Verbundgläser, die aufgrund praktisch nicht vorhandener Klebkraft bei den ersten Hammerschlägen so großflächige Glasablösungen zeigen, daß der Pummeltest nicht mehr sinnvoll weitergeführt werden kann, erhalten den Pummelwert -1.

Die nachfolgend beschriebenen Δ-Pummel-Tests werden durchgeführt, um nachzuweisen, daß bei erfindungsgemäßen PVB-Folien mit reduzierter Haftung diese gegen thermische Belastung unempfindlicher sind, als dies bei einer Folie, die dasselbe PVB-Harz und denselben Weichmacher im selben Mischungsverhältnis enthält und mit einem Antihaftmittel auf ein vergleichbares Haftungsniveau eingestellt ist, der Fall ist. Dabei wird die thermische Belastung in 3 Varianten, nämlich einem Standard-Autoklavenprozeß, einer zusätzlichen Lagerung bei erhöhter Temperatur und bei einen langen Autoklavenprozeß, wie er bei der industriellen Fertigung von Verbundsicherheitsglas im Extremfall zum Einsatz kommen kann, nachgestellt. Da sich bei den PVB-Folien nach dem Stand der Technik der Haftungsabfall - wenn er auftritt - unter anderem als Funktion von Formulierung, Verbundherstellung, Glassorte und -Vorbehandlung und Orientierung des Glases zur Folie nicht immer gleich schnell einstellt, ist jeweils das schlechteste Ergebnis aus den 3 Varianten der thermischen Belastung, daß heißt, es ist der absolut größte Abfall des Pummelwert-Ergebnisses, egal ob er auf der Feuer- oder auf der Zinnseite auftritt, zu bewerten.

Die 3 Varianten der thermischen Belastung sind wie folgt durchzuführen: Die PVB-Folien werden zunächst in einem Standard-Autoklaven-Prozeß - wie nachfolgend beschrieben - mit 2,1 mm Glas verbunden. Für die thermische Belastung "Warmlagerung" wird ein Prüfling anschließend während 72 h Stunden bei 125 °C vertikal in einen Wärmeschrank gelagert. Für die thermische Belastung der Variante 3 "Langer Autoklavenprozeß" werden die PVB-Folien mit 2 Scheiben aus 2,1 mm Floatglas in einem der üblichen Verfahren, z. B. dem Walzenverfahren, zu einem Vorverbund kombiniert, welcher dann in einem langen Autoklavenprozeß - wie nachfolgend beschrieben - zum Endverbund verklebt wird.

### Standard-Autoklaven-Prozeß

Die nach einem der üblichen, dem Fachmann bekannten Verfahren hergestellten Vorverbunde aus zwei Scheiben Glas und der zu testenden PVB-Folie werden in einen für die Herstellung von Verbundsicherheitsglas ausgelegten Druckautoklaven, z. B. des Herstellers "Scholz", gebracht und dort vertikal oder annähernd vertikal auf einem geeigneten Gestell befestigt. Der Autoklav ist dafür ausgelegt, Temperatur und Druck unabhängig voneinander zu regeln und über längere Zeit konstant zu halten. Es wird ein Druck/Temperatur-Programm durchfahren, welches insgesamt 90 min. dauert und hier anhand des zeitlichen Verlaufs (Start: 0 min, Ende: 90 min) definiert wird: Von Umgebungstemperatur (ca. 20 °C) ausgehend, erreicht die Autoklaveninnentemperatur nach 30 min. die maximale Temperatur von 140 °C, welche dann bis zur 60. min., daß heißt während 30 min, konstant bleibt.

Von der 60 min. bis zur 90 min. wird die Autoklaveninnentemperatur von 140 °C auf 40 °C verringert.

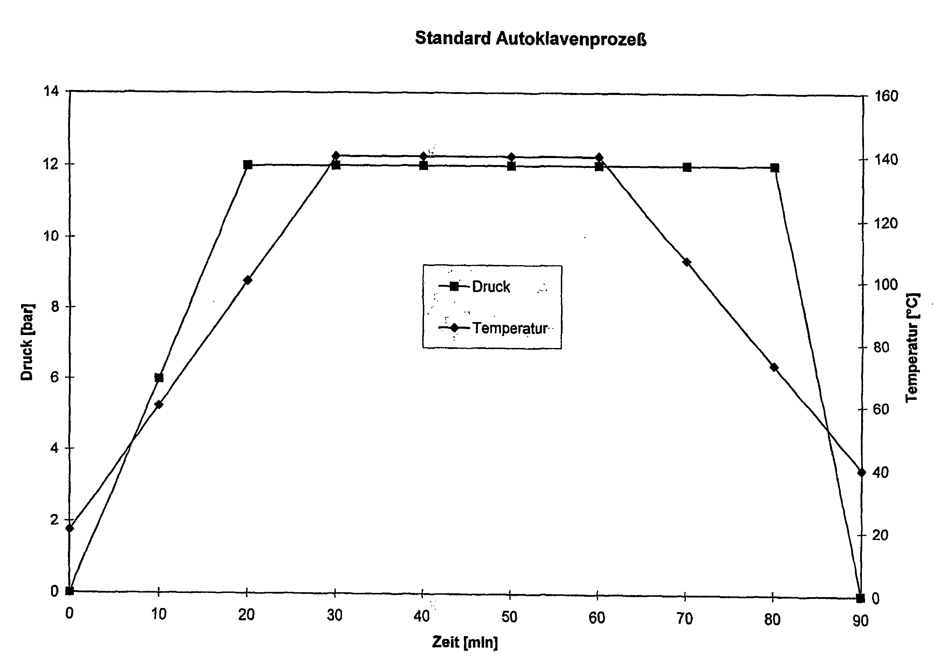

Der Druck wird ausgehend vom Atmosphärendruck bis zur 20. min. um 12 bar erhöht und konstant bei diesem Wert bis zur 80 min. beibehalten, wonach er bis zur 90. min., also dem Ende des Autoklaven-Prozesses, wieder auf Atmosphärendruck reduziert wird. Sämtliche Änderungen der Parameter Druck und Temperatur sind dabei stetig vorzunehmen, so daß eine rampenförmige Heiz- und Druckkurve resultiert. Eine graphische Darstellung des Standard-Autoklaven-Prozesses findet sich in Fig. 2.

### Langer Autoklaven-Prozeß

Die nach einem der üblichen, dem Fachmann bekannten Verfahren hergestellten Vorverbunde aus zwei Scheiben Glas und der zu testenden PVB-Folie werden in einen für die Herstellung von Verbundsicherheitsglas ausgelegten Druckautoklaven, z. B. des Herstellers "Scholz", gebracht und dort vertikal oder annähernd vertikal auf einem geeigneten Gestell befestigt. Der Autoklav ist dafür ausgelegt, Temperatur und Druck unabhängig voneinander zu regeln und über längere Zeit konstant zu halten. Es wird ein Druck/Temperatur-Programm durchfahren, welches insgesamt 330 min. dauert und hier anhand des zeitlichen Verlaufs (Start: 0 min, Ende: 330 min) definiert wird: Von Umgebungstemperatur (ca. 20 °C) ausgehend, erreicht die Autoklaveninnentemperatur nach 30 min. die maximale Temperatur von 140 °C, welche dann bis zur 300 min., daß heißt während 270 min, konstant bleibt. Von der 300 min. bis zur 320 min. wird die Autoklaveninnentemperatur von 140 °C auf 40 °C verringert, um während der verbleibenden 10 min. des Prozesses beibehalten zu werden.

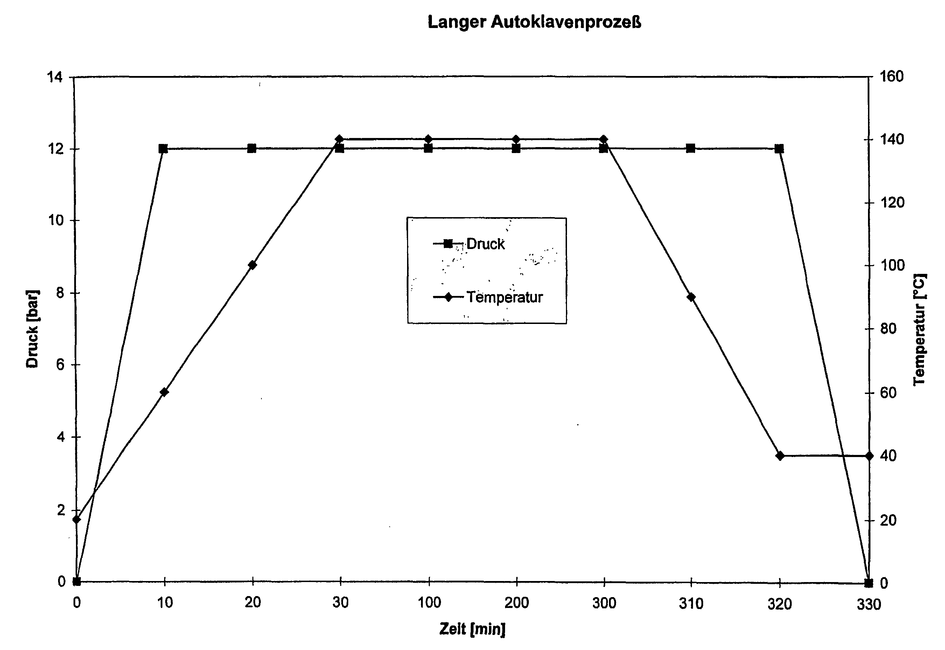

Der Druck wird ausgehend vom Atmosphärendruck bis zur 10 min. um 12 bar erhöht und konstant bei diesem Wert bis zur 320 min. beibehalten, wonach er bis zur 330 min., also dem Ende des Autoklaven-Prozesses, wieder auf Atmosphärendruck reduziert wird. Sämtliche Änderungen der Parameter Druck und Temperatur sind dabei stetig vorzunehmen, so daß eine rampenförmige_Heiz- und Druckkurve resultiert. Eine graphische Darstellung des langen Autoklaven-Prozesses findet sich in Fig. 3.

### Warmlagerung

Für die thermische Belastung "Warmlagerung" wird ein Prüfling zunächst nach dem Standard-Autoklaven-Prozeß hergestellt und anschließend für 72 h Stunden bei 125 °C vertikal in einen Wärmeschrank gelagert.

### Ermittlung der Δ-Pummelwerte

Nach Durchführung von 6 einzelnen Pummelprüfungen, jeweils zwei (Feuer- und Zinnseite) für ein Laminatmuster aus dem Standardautoklavenprozeß, für ein Laminatmuster aus dem langen Autoklavenprozeß, für ein Laminatmuster aus der Warmlagerung während 72 h, wird dann für die Feuerseite der Pummelwert nach dem Standard-Autoklavenprozeß mit den weiteren zwei Pummelwerten der Feuerseite bei den thermisch belasteten Laminatmustern verglichen und der Absolutwert der größten vorkommenden Differenz der gemessenen Pummelwerte ermittelt. Diese maximale Differenz der gemessenen Pummelwerte für eine Folie ist der Δ-Pummel-Wert der Feuerseite. Ebenso ist für die Zinnseite zu verfahren, die maximale Differenz der gemessenen Pummelwerte der Zinnseite für eine Folie ist dann der Δ-Pummel-Wert der Zinnseite. Der größere Δ-Pummel-Wert von beiden ist dann der "maximale Δ-Pummel-Wert" einer Folie. Dieser sollte möglichst klein sein, jedenfalls kleiner/gleich 2,5. Werte von 3 oder mehr führen zu nicht mehr akzeptablen Haftungsschwankungen. Der Absolutwert aller 6 gemessenen Pummelwerte liegt erfindungsgemäß im Bereich ≥ 1,5 und ≤ 8.

Als weiterer unerwarteter Effekt bei der erfindungsgemäßen Zugabe von Organophosphiten bzw. Organophosphaten hat sich herausgestellt, daß das Haftungsniveau auf beiden Glasoberflächen, also der Feuerseite und der Zinnseite, jeweils in sehr engem Rahmen bewegt, sonst übliche Unterschiede auf beiden Seiten somit verringert werden.

Für die Herstellung der PVB-Folien aus den Beispielen wird das PVB-Pulver in den Einzugsbreich eines Extruders gefördert, wo es mit dem Weichmacher, in dem zuvor der UV-Absorber, das Antihaftmittel und die phosphororganische Verbindung sowie optional weitere Additive so homogen wie möglich verteilt worden sind, zusammengeführt und in eine homogene Schmelze überführt wird, die durch eine Breitschlitzdüse zu einer Folienbahn ausgeformt wird.

### Kurze Beschreibung der Zeichnung

Die Erfindung wird nachfolgend anhand eines Ausführungsbeispiels sowie der Zeichnung näher erläutert. Es zeigen dabei:
- Fig. 1: eine graphische Erläuterung des Pummeltests
- Fig. 2: eine graphische Darstellung des Standard-Autoklaven-Prozesses
- Fig. 3: eine graphische Darstellung des langen Autoklaven-Prozesses

### Wege zur Ausführung der Erfindung und Vergleichsbeispiele

Für die nachfolgend aufgeführten und in der Tabelle 2 wiedergegebenen erfindungsgemäßen Beispiele 1, 5 und 7 sowie die Vergleichsbeispiele 2 bis 4 und 6 wurden zunächst in dem Fachmann an sich bekannter Weise gemäß der EP 0 185 863 B1 Folien einer Dicke von 0,76 mm hergestellt. Hierzu wurde eine Mischung von handelsüblichem PVB (Mowital® LP B 68/1 SF der Firma Clariant) mit ebenfalls handelsüblichem Weichmacher, nämlich Versuche 1 bis 5: 3G7, Versuche 6 und 7: DHA, in einem Einschneckenextruder bei einem Durchsatz von 160 kg/h homogenisiert und aufgeschmolzen und durch ein Breitschlitzwerkzeug extrudiert. Nach entsprechender Konditionierung hatten alle Folien den gleichen Wassergehalt von 0,47 Gew.-%.

In Beispiel 1 wurden zu der Grundmischung von 74 Gew.-% PVB und 26 Gew.-% des Weichmachers 3G7 als Antihaftmittel 0,04 Gew.-% einer 30 %-igen Magnesiumoktanoat-Lösung zugegeben, d.h., auf 1 kg Folienansatz kamen 0,12 g Magnesiumoktanoat. Zur Vergleichmäßigung der Pummelwerte wurden 0,15 Gew.-% des Organophosphits Alkanox® TNPP zugesetzt. Wie sich aus der Tabelle 2 ergibt, wurden die Pummelwerte nach dem Standard-Autoklaven-Prozeß auf der Feuerseite mit 5,5 und auf der Zinnseite mit 5 gemessen. Nach dem langen Autoklaven-Prozeß, wie vorstehend definiert, ergaben sich Pummelwerte auf der Feuerseite mit 4 und auf der Zinnseite ebenfalls mit 4. Die Pummelwerte nach Warmlagerung von 72 h bei 125 °C, wie vorstehend definiert, ergaben sich mit 3,5 auf der Feuerseite und 5 auf der Zinnseite. Damit ergibt sich ein Δ-Pummel-Wert für die Feuerseite von 2, ein Δ-Pummel-Wert auf der Zinnseite von 1 und ein maximaler Δ-Pummel-Wert von 2.

Aus dem Vergleichsbeispiel 2 ergibt sich, daß ohne das erfindungsgemäße zugesetzte Organophosphit zunächst trotz geringerer Antihaftmittel-Menge von 0,025 Gew.-% einer 30 %-igen Magnesiumoktat-Lösung die Pummelwerte nach dem Standard-Autoklaven-Prozeß mit 3,5 auf der Feuerseite und 3 auf der Zinnseite niedriger liegen als die Werte in Beispiel 1. Die Bestimmung der Pummelwerte nach dem langen Autoklaven-Prozeß liegen jedoch bereits bei jeweils 0, nach der Warmlagerung sogar bei -1 und 0 (s. Tabelle 2), so daß Δ-Pummelwerte für die Feuerseite von 4,5 und für die Zinnseite von 3 resultieren. Der maximale Δ-Pummel-Wert von 4,5 führt zu nicht mehr akzeptablen Werten für das Endprodukt.

In Vergleichsbeispiel 3 wurde mit dem gleichen Antihaftmittel-Gehalt von 0,04 Gew.-% (der 30 %-igen Lösung) wie in Beispiel 1 gearbeitet, die resultierenden Pummelwerte sind nach allen Meßmethoden zu gering für den Praxiseinsatz.

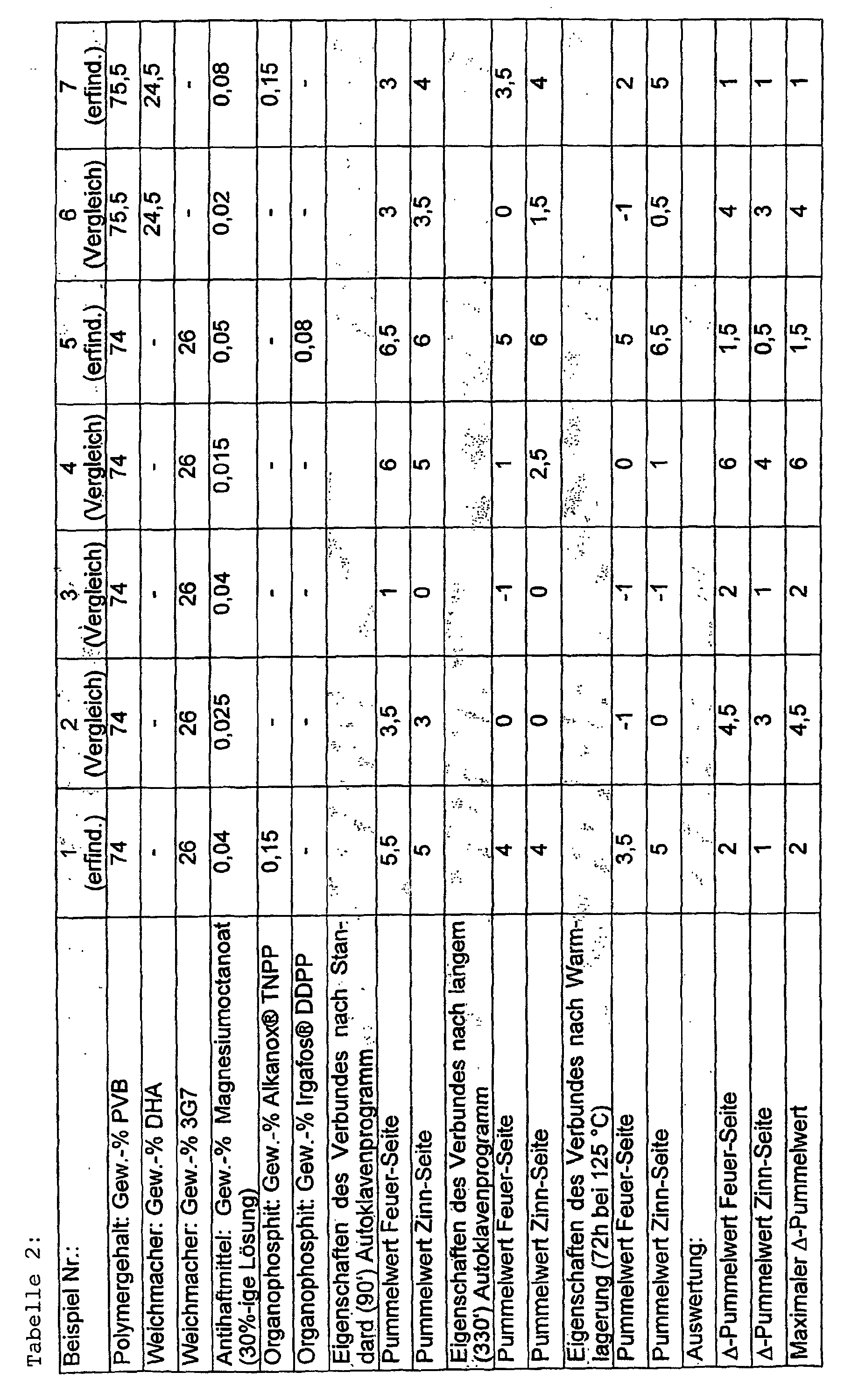

In Vergleichsversuch 4 wurde schließlich die Antihaftmittel-Menge mit 0,015 Gew.-% (der 30 %-igen Lösung) Magnesiumoktanoat so gering eingestellt, daß die Pummelwerte nach dem Standard-Autoklaven-Prozeß wieder im erwünschten Bereich liegen, nämlich auf der Feuerseite mit 6 und auf der Zinnseite mit 5. Jedoch ergab sich ein Abfall des Pummelwertes nach dem langen Autoklaven-Prozeß auf der Feuerseite bis auf 1, auf der Zinnseite bis auf 2,5, und nach der Warmlagerung auf der Feuerseite bis auf 0 und auf der Zinnseite bis auf 1. Daraus resultiert ein nicht mehr akzeptabler maximaler Δ-Pummel-Wert von 6.

In dem erfindungsgemäßen Beispiel 5 wurde ein alternatives Organophosphit, nämlich Irgaphos® DDPP in einer Menge von 0,08 Gew.-% eingesetzt. Die resultierenden Pummelwerte lagen bei sämtlichen Versuchen sehr gleichmäßig zwischen 5 und 6,5, so daß ein maximaler Δ-Pummel-Wert von 1,5 resultiert, ein für die Praxis sehr guter Wert.

Abschließend wurden die Vergleichsversuche 6 und 7 mit dem Weichmacher DHA durchgeführt, wobei daß Antihaftmittel so zugesetzt wurde, daß nach dem Standard-Autoklaven-Prozeß ein Pummelwert zwischen 3 und 4 resultierte. Im Verhältnis zu dem Weichmacher 3G7 benötigt man hierfür erheblich höhere Mengen an Antihaftmittel. Bei dem erfindungsgemäßen Beispiel 7 mit 0,15 Gew.-% Zugabe von Alkanox® TNPP lagen alle Pummelwerte sehr eng im vorgegebenen Rahmen, so daß ein maximaler Δ-Pummel-Wert von 1 resultiert. Ohne den erfindungsgemäßen Zusatz von Organophosphit fällt der Pummelwert auf Werte zwischen 1,5 und -1 ab, so daß ein maximaler Δ-Pummel-Wert von 4 resultiert.

Die Erfindung wird angewendet bei der Herstellung von Folien zur Herstellung von Verbundsicherheitsgläsern, insbesondere zum Einsatz im Bau- und Automobilbereich.

## Patentansprüche

1. Folie auf der Basis von weichmacherhaltigem teilacetalisierten Polyvinylalkohol zur Verwendung als Zwischenschicht in Verbundsicherheitsgläsern, enthaltend
- 0,001 bis 0,25 Gew.-%, bezogen auf den Gesamtansatz der Folie, eines oder mehrerer die Haftung der Folie an einer Glasoberfläche reduzierenden Zusätze, ausgewählt aus der Gruppe bestehend aus
• Magnesiumsalzen organischer Säuren,
• Kalziumsalzen organischer Säuren,
- und einen die Haftungschwankungen ausgleichenden Zusatz, enthaltend eine oder mehrere Phosphorverbindungen ausgewählt aus der Gruppe bestehend aus
• symmetrischen oder asymmetrischen Triestern der Phosphorigen Säure mit Aryl-, Arylalkyl- und/oder Alkylsubstituenten,
• symmetrischen oder asymmetrischen Triestern der Orthophosphorsäure mit Aryl-, Arylalkyl- und/oder Alkylsubstituenten,
wobei die Phosphorverbindungen in einer solchen Menge zugesetzt werden, daß
• der Pummelwert, wie in der Beschreibung definiert, eines Verbundglases, hergestellt mit der Folie als Zwischenschicht, nach
- dem 90-min-Standard-Autoklavenverfahren,
- nach dem 330 min. langen Autoklavenverfahren und
- nach der Warmlagerung für 72 Stunden bei 125 °C jeweils auf beiden Glasseiten ≥ 1,5 und ≤ 8 liegt, und
• der maximale Δ-Pummelwert, wie in der Beschreibung definiert, ≤ 2,5 liegt.

2. Folie nach Anspruch 1, **dadurch gekennzeichnet, daß** als die Haftung der Folie an einer Glasoberfläche reduzierender Zusatz. Magnesiumoctanoat in einer Konzentration von 0,001 bis 0,2 Gew.-%, bezogen auf den Gesamtansatz der Folie, eingesetzt wird.

3. Folie nach Anspruch 2, **dadurch gekennzeichnet, daß** als Weichmacher 3G8, 3G7 und/oder DHA eingesetzt wird und daß das Magnesiumoctanoat
- bei Verwendung von 3G8 als Weichmacher in einer Menge von 0,01 bis 0,1 Gew.-%,
- bei Verwendung von 3G7 als Weichmacher in einer Menge von 0,005 bis 0,05 Gew.-%,
- bei Verwendung von DHA als Weichmacher in einer Menge von 0,005 bis 0,05 Gew.-%,
- bei Verwendung einer Weichmachermischung ein entsprechender Zwischenwert an Magnesium-2-ethylhexanoat,
jeweils bezogen auf den Gesamtansatz der Folie, eingesetzt wird.

4. Folie nach einem der Ansprüche 1 bis 3, **dadurch gekennzeichnet, daß** als die Haftungschwankungen ausgleichender Zusatz ein oder mehrere Phosphite aus der Gruppe bestehend aus Tris(nonylphenyl)phosphit, Triphenylphosphit und Diphenyl-octylphosphit in einer Konzentration von 0,05 bis 0,5 Gew. % eingesetzt wird.

5. Folie nach einem der Ansprüche 1 bis 4, **dadurch gekennzeichnet, daß** als die Haftungschwankungen ausgleichender Zusatz Tris(nonylphenyl)phosphit, Triphenylphosphit und/oder Diphenyl-octylphosphit in einer Konzentration von 0,1 bis 0,2 Gew. % eingesetzt wird.

6. Laminat, umfassend wenigstens eine Silikatglasschicht sowie eine Folie nach einem der Ansprüche 1 bis 5.

7. Verwendung von Phosphorverbindungen, ausgewählt aus der Gruppe bestehend aus
• symmetrischen oder asymmetrischen Triestern der Phosphorigen Säure mit Aryl-, Arylalkyl- und/oder Alkylsubstituenten,
• symmetrischen oder asymmetrischen Triestern der Orthophosphorsäure mit Aryl-, Arylalkyl- und/oder Alkylsubstituenten,
als die Haftungschwankungen bei der Weiterverarbeitung ausgleichender Zusatz in Folien auf der Basis von weichmacherhaltigem teilacetalisierten Polyvinylalkohol.

## Claims

1. A film based on plasticized partially acetalized polyvinyl alcohol for use as intermediate layer in laminated safety glass, comprising
- from 0.001 to 0.25% by weight, based on the entire film mixture, of one or more additives which reduce adhesion of the film to a glass surface, these having been selected from the group consisting of
• magnesium salts of organic acids,
• potassium salts of organic acids,
- and an additive compensating for adhesion variations and comprising one or more phosphorus compounds selected from the group consisting of
• symmetrical or asymmetrical triesters of phosphorous acid with aryl, arylalkyl, and/or alkyl substituents,
• symmetrical or asymmetrical trimesters of orthophosphoric acid with aryl, arylalkyl, and/or alkyl substituents,
where the amount added of the phosphorus compounds is such that
• the pummel value, as defined in the description, of a laminated glass produced using the film as intermediate layer, after
- the 90 min. standard autoclave process,
- after the 330 min. long autoclave process, and
- after heat-aging for 72 hours at 125°C is ≥ 1.5 and ≤ 8 on each of the two glass sides, and
• the maximum Δ-pummel value, as defined in the description, is ≤ 2.5.

2. The film as claimed in claim 1, **characterized in that** the additive used which reduces adhesion of the film to a glass surface comprises magnesium octanoate at a concentration of from 0.001 to 0.2% by weight, based on the entire film mixture.

3. The film as claimed in claim 2, **characterized in that** the plasticizer used comprises 3G8, 3G7, and/or DHA, and **in that** the amount used of the magnesium octanoate is
- from 0.01 to 0.1% by weight, if 3G8 is used as plasticizer,
- from 0.005 to 0.05% by weight, if 3G7 is used as plasticizer
- from 0.005 to 0.05% by weight, if DHA is used as plasticizer
an appropriate intermediate amount of magnesium 2-ethylhexanoate, if use is made of a plasticizer mixture, based in each case on the entire film mixture.

4. The film as claimed in any of claims 1 to 3, **characterized in that** the additive used compensating for adhesion variations comprises one or more phosphites from the group consisting of tris(nonylphenyl) phosphite, triphenyl phosphite and diphenyl octyl phosphite in a concentration of from 0.05 to 0.5% by weight.

5. The film as claimed in any of claims 1 to 4, **characterized in that** the additive used compensating for adhesion variations comprises tris(nonylphenyl) phosphite, triphenyl phosphite and/or diphenyl octyl phosphite in a concentration of from 0.1 to 0.2% by weight.

6. A laminate, encompassing at least one silicate glass layer, and also a film as claimed in any of claims 1 to 5.

7. The use of phosphorus compounds, selected from the group consisting of
• symmetrical or asymmetrical triesters of phosphorous acid with aryl, arylalkyl, and/or alkyl substituents,
• symmetrical or asymmetrical triesters of orthophosphoric acid with aryl, arylalkyl, and/or alkyl substituents,
as additive compensating for the variations in adhesion during further processing, in films based on plasticized partially acetalated polyvinyl alcohol.

## Revendications

1. Feuille à base de poly(alcool vinylique) plastifié et partiellement acétalisé, destinée à servir de couche intermédiaire dans un vitrage feuilleté de sécurité, contenant :
- de 0,001 à 0,25 % en poids, par rapport au poids total de la feuille, d'un ou plusieurs adjuvants réduisant l'adhérence de la feuille à une surface de verre, choisis dans l'ensemble constitué par les suivants :
• sels de magnésium des acides organiques,
• sels de calcium des acides organiques,
- et un adjuvant servant à compenser les variations d'adhérence et contenant un ou plusieurs composés phosphorés choisis dans l'ensemble constitué par les suivants :
• triesters symétriques ou non-symétriques de l'acide phosphoreux, à substituants aryle, aryl-alkyle et/ou alkyle,
• triesters symétriques ou non-symétriques de l'acide orthophosphorique, à substituants aryle, aryl-alkyle et/ou alkyle,
ces composés phosphorés étant ajoutés en une quantité telle que
• l'indice pummel, défini dans la description, d'un verre feuilleté fabriqué avec la feuille en tant que couche intermédiaire, après
- 90 minutes de traitement standard en autoclave,
- un traitement en autoclave prolongé pendant 330 minutes,
- ou 72 heures de séjour à 125 °C,
est dans chaque cas, des deux côtés du verre, supérieur ou égal à 1,5 et inférieur ou égal à 8,
• et la différence Δ(pummel) maximale, définie dans la description, est inférieure ou égale à 2,5.

2. Feuille conforme à la revendication 1, **caractérisée en ce que**, en tant qu'adjuvant réduisant l'adhérence de la feuille à une surface de verre, on emploie de l'octanoate de magnésium, en une quantité représentant de 0,001 à 0,2 % du poids total de la feuille.

3. Feuille conforme à la revendication 2, **caractérisée en ce que** l'on emploie de 3G8, du 3G7 et/ou du DHA en tant que plastifiant, et **en ce que** l'on emploie de l'octanoate de magnésium en un pourcentage pondéral
- de 0,01 à 0,1 % si l'on emploie du 3G8 comme plastifiant,
- de 0,005 à 0,05 % si l'on emploie du 3G7 comme plastifiant,
- de 0,005 à 0,05 % si l'on emploie du DHA comme plastifiant,
- et si l'on emploie un mélange de ces plastifiants, en un pourcentage intermédiaire correspondant en 2-éthylhexanoate de magnésium,
pourcentage rapporté dans chaque cas au poids total de la feuille.

4. Feuille conforme à l'une des revendications 1 à 3, **caractérisée en ce que**, en tant qu'adjuvant servant à compenser les variations d'adhérence, on emploie un ou plusieurs phosphites choisis dans l'ensemble constitué par le phosphite de tris(nonyl-phényle), le phosphite de triphényle et le phosphite de diphényle et d'octyle, en une proportion pondérale de 0,05 à 0,5 %.

5. Feuille conforme à l'une des revendications 1 à 4, **caractérisée en ce que**, en tant qu'adjuvant servant à compenser les variations d'adhérence, on emploie du phosphite de tris(nonyl-phényle), du phosphite de triphényle et/ou du phosphite de diphényle et d'octyle, en une proportion pondérale de 0,1 à 0,2 %.

6. Stratifié comprenant au moins une couche de verre de silicate, ainsi qu'une feuille conforme à l'une des revendications 1 à 5.

7. Emploi de composés phosphorés, choisis dans l'ensemble constitué par les suivants :
• triesters symétriques ou non-symétriques de l'acide phosphoreux, à substituants aryle, aryl-alkyle et/ou alkyle,
• triesters symétriques ou non-symétriques de l'acide orthophosphorique, à substituants aryle, aryl-alkyle et/ou alkyle,
en tant qu'adjuvant servant à compenser les variations d'adhérence dans la suite du traitement, dans des feuilles à base de poly(alcool vinylique) plastifié et partiellement acétalisé.
